# FASCICULE DE BREVET EUROPEEN

(11) **EP 0 725 961 B1**
(45) Date de publication et mention de la délivrance du brevet: **06.05.1998**
(21) Numéro de dépôt: 94931073.4
(22) Date de dépôt: 17.10.1994
(51) Int. Cl.: G08B 21/00, H04L 25/30

(54) **DISPOSITIF NUMERIQUE DE MULTI-COMPARAISON DYNAMIQUE NOTAMMENT POUR LA SURVEILLANCE EN TEMPS REEL D'UNE PLURALITE DE SIGNAUX**
DIGITALSCHALTUNG MIT DYNAMISCHEM MEHRFACHVERGLEICH ZUR ECHTZEITÜBERWACHUNG MEHRERER SIGNALE
DYNAMIC MULTIPLE COMPARISON DIGITAL DEVICE, IN PARTICULAR, FOR REAL TIME MONITORING OF A PLURALITY OF SIGNALS

(30) Priorité: 18.10.1993 FR 9312365
(43) Date de publication de la demande: 14.08.1996
(73) Titulaire: INNOVA SON, S.A.R.L., F-56880 Ploeren (FR)
(72) Inventeur: ROYER, Christian, F-56400 Le Bono (FR); ROYER, Philippe, F-56610 Arradon (FR); MAGNEN, Bernard, 56000 Vannes (FR)
(74) Mandataire: Dawidowicz, Armand
(86) Numéro de dépôt international: FR9401200
(87) Numéro de publication internationale: WO9511497

(56) Documents cités:
- EP-A- 0 245 178
- EP-A- 0 248 732
- FR-A- 2 693 300
- PATENT ABSTRACTS OF JAPAN vol. 10, no. 54 (E-385) (2111) & JP,A,60 208 145 (NIPPON DENSHIN DENWA KOSHA)

## Description

La présente invention concerne de manière générale le traitement des signaux. Plus particulièrement, l'invention concerne la surveillance en temps réel des évolutions d'une pluralité de signaux disponibles sous la forme d'un flux ininterrompu de mots numériques.

Le développement des techniques entraîne une complexité toujours croissante des systèmes. Dans un système complexe tel que, par exemple, des systèmes de commande et de contrôle dans des centrales nucléaires, le nombre de signaux susceptibles de dysfonctionnement ou nécessitant des ajustements en temps réel est toujours très important. Les impératifs de sécurité imposent souvent le temps réel dans le traitement des signaux, et il existe un véritable besoin pour des dispositifs de surveillance performants capables de suivre les évolutions d'une pluralité de signaux. Avec de tels dispositifs de surveillance, il devient possible de détecter certains événements particuliers dans les signaux afin de prendre très rapidement des mesures adaptées ou d'actionner des alarmes. Dans un autre domaine, celui des systèmes de transmission de signaux audio haute-fidélité tels ceux produits et traités dans des studios d'enregistrement, des scènes et régies de radio, de télévision ou des salles de concert, il est important de pouvoir surveiller en temps réel les signaux, essentiellement pour éviter des distorsions dues à des saturations et ajuster les gains de façon optimale.

Des traitements en temps réel de signaux pour des applications diverses ont par ailleurs déjà été développés. Un exemple d'un tel procédé de traitement de signaux en temps réel est décrit dans le brevet EP-A-0.248.732. Ce procédé, destiné à la mesure et à la surveillance de valeurs notamment des eaux usées dans le cadre d'installation de surveillance, consiste à mesurer les valeurs d'un signal prédéterminé, à enregistrer lesdites valeurs instantanées de mesure, à comparer lesdites valeurs de mesure avec des valeurs mémorisées et à déclencher un signal d'alarme lorsque ladite valeur mesurée est supérieure ou inférieure à la valeur mémorisée. Ce procédé ne permet pas d'obtenir à l'issue de la comparaison de nouvelles valeurs susceptibles d'être traitées ultérieurement.

La présente invention vise donc à fournir des dispositifs de multi-comparaison dynamique permettant de surveiller simultanément un nombre élevé de signaux fournis sous la forme de mots numériques, et cela en temps réel.

Un autre objectif de l'invention est de fournir des dispositifs de multi-comparaison dynamique qui, de par leur conception, soient réalisables sous la forme de circuits intégrés, afin d'être facilement intégrables dans des systèmes et cela au meilleur coût et avec des garanties maximales de fiabilité.

A cette fin, l'invention concerne un dispositif de multi-comparaison dynamique pour surveiller en temps réel des évolutions dans un flux de mots numériques entrants, caractérisé en ce qu'il comprend des moyens de mémorisation ayant N cellules de mémoire pour mémoriser respectivement N mots numériques précédemment sélectionnés dans ledit flux de mots numériques entrants, N étant un entier prédéterminé, des moyens de comparaison pour effectuer une série de N comparaisons respectivement entre N mots numériques entrants et lesdits N mots numériques mémorisés, à chaque comparaison, un mot numérique entrant étant comparé à un mot numérique mémorisé de même rang, des moyens de sélection pour sélectionner à l'issue de chacune des N comparaisons un mot numérique parmi les deux mots numériques comparés et cela en fonction d'une condition de comparaison prédéterminée et pour obtenir ainsi N mots numériques sélectionnés, des premiers moyens d'écriture pour écrire lesdits N mots numériques sélectionnés respectivement dans lesdites N cellules de mémoire desdits moyens de mémorisation, des moyens de lecture pour lire des mots numériques mémorisés dans lesdits moyens de mémorisation, et des moyens de commande pour commander un fonctionnement cyclique du dispositif et traiter ainsi la totalité dudit flux de mots numériques entrants au moyen d'une pluralité de séries successives de N comparaisons chacune.

Selon une autre caractéristique, le dispositif selon l'invention comprend également des seconds moyens d'écriture pour écrire épisodiquement ou cycliquement des mots numériques d'initialisation dans lesdites cellules de mémoire desdits moyens de mémorisation.

Encore un autre objectif de l'invention est de fournir des dispositifs de multi-comparaison dynamique aisément intégrables dans des systèmes professionnels de traitement de signaux audio haute-fidélité.

A cette fin, un dispositif de multi-comparaison dynamique inclus dans un système professionnel de commutation et de transmission bidirectionnelle à multiplexage temporel de signaux haute-fidélité audio-numériques et audio-analogiques est caractérisé en ce qu'il comprend des moyens pour autoriser un affichage desdits mots numériques mémorisés sur un écran d'un micro-ordinateur inclus également dans le système et cela dans une pluralité de blocs de commande prévus sur ledit écran afin de permettre à un utilisateur de surveiller en temps réel l'évolution de différents paramètres d'une pluralité de signaux transmis dans le système et de commander en temps réel des modifications et adaptations de configuration du système. De préférence, le dispositif comprend également des moyens d'adressage inclus dans les moyens de lecture afin de commander des lectures dans lesdits moyens de comparaison de séries quelconques de mots numériques mémorisés.

D'autres caractéristiques et avantages de l'invention apparaîtront à la lecture de la description suivante de plusieurs exemples de réalisation préféré des dispositifs de multi-comparaison dynamique selon l'invention, dans lesquels:
la figure 1 est un bloc-diagramme d'un mode de réalisation préféré d'un dispositif selon l'invention;
la figure 2 représente un exemple de signal d'entrée audio fourni à un dispositif selon l'invention et un signal de sortie correspondant reconstituable à partir de mots numériques délivrés par le dispositif;
la figure 3 montre un chronogramme de fonctionnement relatif au dispositif selon la figure 1; et
la figure 4 montre un écran d'un micro-ordinateur comprenant une pluralité de blocs de commande dans lesquels sont affichés des résultats fournis par un dispositif selon l'invention et cela afin de permettre une surveillance et une commande en temps réel dans un système de transmission de signaux audio haute-fidélité.

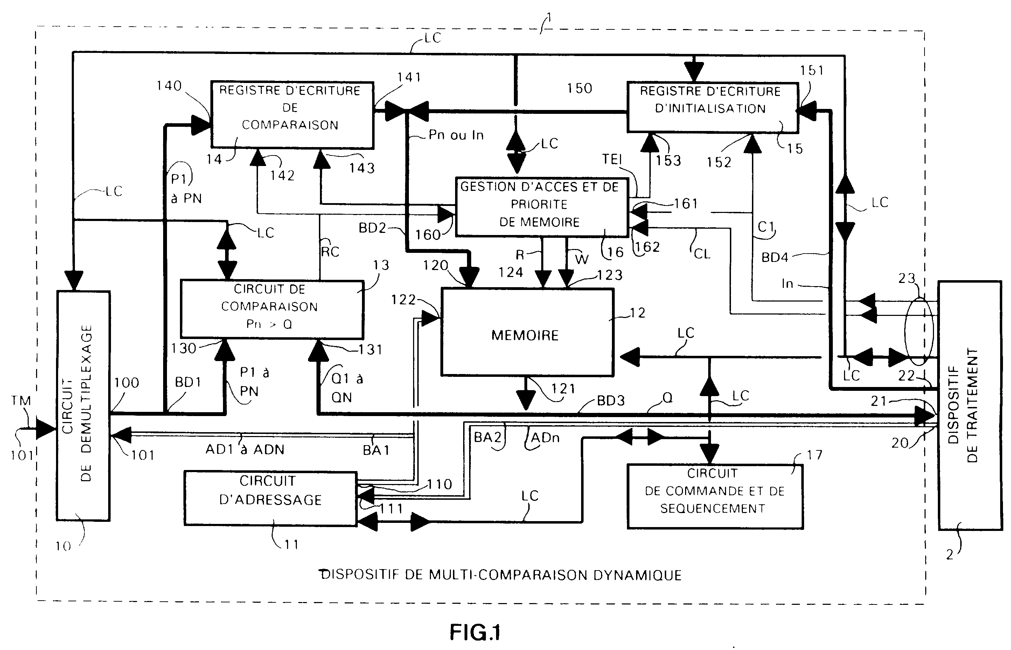

En référence à la figure 1, un dispositif de multi-comparaison dynamique ou multi-comparateur dynamique selon l'invention comprend essentiellement un circuit de démultiplexage 10, un circuit d'adressage 11, une mémoire 12, un circuit de comparaison 13, un registre d'écriture de comparaison 14, un registre d'écriture d'initialisation 15, un circuit de gestion d'accès et de priorité de mémoire 16 et un circuit de commande et de séquencement 17.

Le circuit de démultiplexage est relié en entrée à un ligne de transmission 101 convoyant des trames successives de multiplex TM composées chacune de N mots numériques de données d'entrée P1 à PN sous la forme de bits en série, N étant un entier. La ligne de transmission 101 est par exemple constituée d'un câble coaxial ou d'une paire torsadée classique. Les mots P1 à PN représentent, par exemple, des signaux audio-analogiques p1 à pN, respectivement. Les signaux p1 à pN sont échantillonnés à une fréquence d'échantillonnage Fe (période d'échantillonnage Te = 1/Fe) et sont ensuite numérisés. Le circuit de démultiplexage 10 a pour fonction principale de démultiplexer les trames TM et ainsi de rendre accessibles les mots P1 à PN sous la forme de mots constitués de L bits en parallèle, L étant un entier. Les mots P1 à PN sont délivrés en sortie sur un bus de données à travers un port de sortie de données 100 BD1. Le bus de données BD1 est relié à un premier port d'entrée de données 130 du circuit de comparaison 13 et à un port d'entrée de données 140 du registre d'écriture de comparaison 14. Le circuit de démultiplexage 10 transmet successivement les mots P1 à PN sur le bus de données BD1 à la réception de mots numériques d'adresse AD1 à ADN, respectivement.

Les mots d'adresse AD1 à ADN sont produits par le circuit d'adressage 11 et sont fournis au circuit de démultiplexage 10 à travers un port de sortie d'adresses 110 connecté à un bus d'adresses BA1. Les mots d'adresses AD1 à ADN sont constitués sous la forme de plusieurs bits en parallèle. Le bus BA1 est relié à un port d'entrée d'adresses 101 du circuit de démultiplexage 10 et à un port d'entrée d'adresses 122 de la mémoire 12.

Le circuit d'adressage 11 est de type classique et est conçu essentiellement autour d'un compteur binaire. Selon un premier mode de fonctionnement, le circuit d'adressage 11 produit séquentiellement les mots d'adressage ADn, n étant un entier compris entre 1 et N et représentatif d'un rang dans la trame TM, et les délivre ensuite sur le bus BA1.

Selon un second mode de fonctionnement, le circuit d'adressage 11 reçoit, à un port d'entrée d'adresses 111, les mots d'adresses ADn à travers un bus d'adresses BA2 relié à un port de sortie d'adresses 20 du dispositif de traitement 2, et transmet de manière "transparente" les mots d'adresse reçus Adn en direction du bus d'adresses BA1. Les mots d'adresse ADn peuvent être transmis sur le bus BA2 dans un ordre quelconque, séquentiellement ou pas, par exemple, selon la suite suivante "AD3, AD1, AD16, AD3, ADN...ADn...AD9". L'intérêt de ce second mode de fonctionnement sera clarifié plus en avant dans la description.

La mémoire 12 est prévue pour contenir N mots numériques de données Q1 à QN de L bits chacun. La mémoire 12 comprend en entrées/sorties essentiellement un port d'écriture de données 120, un port de lecture de données 121, le port d'adresses 122 et des entrées de commande d'écriture 123 et de lecture 124.

Le port d'écriture de données 120 est relié à travers un bus de données BD2 à des ports de sortie de données 141 et 150 du registre d'écriture de comparaison 14 et du registre d'écriture d'initialisation 15, respectivement, et reçoit soit des mots de données d'entrée Pn soit des mots numériques de données d'initialisation In à écrire dans la mémoire 12. Le port de lecture de données 121 est relié à travers un bus de données BD3 à un second port d'entrée de données 131 du circuit de comparaison 13 et à un port d'entrée de données 21 du dispositif de traitement 2. Le port de sortie de données 121 délivre les mots numériques de données Qn mémorisés lorsque la mémoire 12 est commandée en lecture. Le port d'adresses 122 reçoit les mots d'adresses ADn de manière à sélectionner dans la mémoire 12 des cellules de mémoire correspondantes. La mémoire 12 comprend N cellules contenant N mots numériques mémorisés Q1 à QN sélectionnés par les mots d'adresse AD1 à ADN, respectivement. L'entrée de commande d'écriture 123 reçoit un signal de commande d'écriture W fourni par le circuit de gestion d'accès et de priorité de mémoire 16. L'entrée de commande de lecture 124 reçoit un signal de commande de lecture R fourni par le circuit de gestion d'accès et de priorité de mémoire 16. Les signaux W et R commandent dans la mémoire 12 respectivement une écriture d'un mot de données Pn ou In présent sur le bus de données BD2 et une lecture d'un mot de données Qn mémorisé dans la mémoire 12, et cela dans la cellule de mémoire correspondant au mot d'adresse ADn appliqué à ce moment là au port d'entrée d'adresses 122 de la mémoire 12.

Le circuit de comparaison 13 a pour fonction de comparer les mots de données d'entrée Pn et les mots de données mémorisés Qn. Le circuit de comparaison 13 active un signal de résultat de comparaison RC à un état logique "1" lorsqu'une condition de comparaison prédéterminée est réalisée entre les mots Pn et Qn. Dans le cas de cette forme de réalisation, ladite condition de comparaison correspond à la fonction logique "supérieur à" (>). Ainsi, conformément à cette condition de comparaison, lorsque la valeur absolue du mot Pn est supérieure à la valeur absolue du mot Qn, la condition est réalisée et le signal RC vient à l'état logique "1" ; lorsque la valeur absolue du mot Pn est égale ou inférieure à la valeur absolue du mot Qn, la condition n'est pas réalisée et le signal RC reste à l'état logique "0". Le signal de résultat de comparaison RC est fourni à une entrée de commande de lecture 142 du registre d'écriture de comparaison 14 et à une entrée de commande d'écriture 160 du circuit de gestion d'accès et de priorité de mémoire 16.

Le registre d'écriture de comparaison 14 est du type mémoire-tampon et contient le même mot de données d'entrée Pn que celui en cours de comparaison dans le circuit de comparaison 13. Le mot Pn est chargé simultanément dans le circuit de comparaison 13 et dans le registre 14. Le registre 14 est du type à trois états (tristate) et a la capacité d'isoler ou de déconnecter son port de sortie de données 141 du bus de données BD2 lorsqu'une entrée de commande de troisième état 143 est activée. Lorsque le signal de résultat de comparaison RC est à l'état logique actif "1", le mot de données d'entrée Pn contenu dans le registre 14 est fourni au port de sortie de données 141 afin d'être transmis à travers le bus de données BD2 jusqu'au port d'entrée de données 120 de la mémoire 12. Toutefois, lorsque l'entrée de commande de troisième état 143 est activée, le port de sortie de données 141 du registre 14 est déconnecté du bus de données BD2 par des impédances de sortie très élevées, et le mot Pn n'est donc pas transmis sur le bus de données BD2 vers la mémoire 12. Le registre d'écriture d'initialisation 15 est d'un type analogue au registre d'écriture de comparaison 14. Le registre 15 contient un mot de données d'initialisation In à écrire dans la mémoire 12. Le mot In est transmis au registre 15 par le dispositif de traitement 2 à travers un bus de données BD4 et un port d'entrée de données 151 du registre 15. Le dispositif de traitement 2 délivre le mot numérique d'initialisation In à travers un port de sortie de données 22. De même que le registre 14, le registre 15 comprend une entrée de commande de lecture 152 et une entrée de commande de troisième état 153. Lorsqu'un signal de commande d'initialisation CI à un état logique actif "1" est appliqué à l'entrée de commande de lecture 152 du registre 15, le mot de données d'initialisation In contenu dans le registre 15 est fourni au port de sortie de données 150 afin d'être transmis à travers le bus de données BD2 jusqu'au port d'écriture de données 120 de la mémoire 12. Toutefois, lorsque l'entrée de commande de troisième état 153 est activée, le port de sortie de données 150 du registre 15 est déconnecté du bus de données BD2 par des impédances de sortie très élevées et le mot In n'est pas transmis sur le bus de données BD2 vers la mémoire 12. Le signal de commande d'initialisation CI est délivré par le dispositif de traitement 2 à travers une sortie correspondante d'un port de commande 23. Le signal CI est également appliqué à une entrée de commande d'écriture 161 du circuit gestion d'accès et de priorité de mémoire 16.

Le circuit de gestion d'accès et de priorité de mémoire 16 a pour fonction de gérer les accès d'écriture et de lecture de la mémoire 12, et cela en tenant compte de priorités. Dans cette forme de réalisation, le registre d'écriture d'initialisation 13 est prioritaire en écriture dans la mémoire 12 par rapport au registre d'écriture de comparaison 14. En d'autres termes, lorsqu'un mot de données d'initialisation In doit être écrit dans la mémoire 12, il a priorité par rapport à un mot de données d'entrée Pn contenu dans le registre 14 et qui serait également à écrire au même moment dans la mémoire 12. De plus, toujours selon cette forme de réalisation, une demande de lecture des mots de données mémorisés Qn dans la mémoire 12, demande effectuée par le dispositif de traitement 2 au moyen d'un signal de commande de lecture CL, est prioritaire par rapport à une éventuelle demande d'écriture d'un mot de données d'entrée Pn dans la mémoire 12. Le signal de commande de lecture CL est délivré par le dispositif de traitement 2 à travers une sortie correspondante du port de commande 23. Le signal CL est appliqué à une entrée de commande de lecture 162 du circuit de gestion d'accès et de priorité de mémoire 16.

Le circuit de gestion d'accès et de priorité de mémoire 16 est un circuit classique à logique combinatoire. A partir essentiellement des signaux RC, CI et CL, le circuit 16 produit le signal de commande d'écriture de mémoire W, le signal de commande de lecture de mémoire R, ainsi que des signaux de commande de troisième état TEE et TEI fournis respectivement aux registres d'écriture de comparaison 14 et d'écriture d'initialisation 15.

Le circuit de commande et de séquencement 17 a pour fonction principale de commander et séquencer le fonctionnement de l'ensemble du multicomparateur 1 de manière à garantir un synchronisme de fonctionnement, d'une part entre l'ensemble des circuits internes du multicomparateur 1 et d'autre part entre le multicomparateur 1 et les moyens qui y sont connectés, à savoir la ligne de transmission 101 et le dispositif de traitement 2. Le circuit de commande et de séquencement 17 est relié par des liaisons de commande et de séquencement LC aux différents circuits 10 à 16 du multicomparateur 1, ainsi qu'au dispositif de traitement 2. Le circuit de commande et de séquencement 17 comprend essentiellement une base de temps interne (non représentée) asservie à un signal de rythme de multiplexage (non repéré) qui est détecté dans le circuit de démultiplexage 10 à partir des trames de multiplex TM, ainsi que des circuits logiques classiques. Le circuit 17 reçoit donc différents signaux tels que le signal rythme de multiplexage et des signaux de gestion de transfert de données (par exemple, des signaux de validation de données), et fournit aux différents circuit 1 à 16 du et au dispositif de traitement 2 des signaux de commande et de séquencement adaptés aux différents circuits et dispositif de traitement et parfaitement synchrones.

Les différents circuits décrits ci-dessus et inclus dans le multi-comparateur selon l'invention sont tous des circuits intégrables disponibles dans les bibliothèques des fondeurs de circuits intégrés. Le multi-comparateur selon l'invention est donc réalisable sous la forme d'un circuit intégré.

Selon cette forme de réalisation, un mot de données d'entrée Pn est comparé au mot de données mémorisés Qn. Dans le cas où le mot Pn est supérieur au mot Qn, en valeurs absolues, alors le mot Pn est écrit à la place de Qn dans la mémoire 12 et, pour la trame suivante, un nouveau mot de données d'entrée Pn' sera comparé à un nouveau mot de données mémorisées Q'n = Pn. Dans le cas contraire où le mot Pn est égal ou inférieur au mot Qn, en valeurs absolues, le mot Pn n'est pas écrit dans la mémoire 12 et, pour la trame suivante, le nouveau mot de données d'entrée Pn' est comparé au même mot de donnée mémorisée Q'n = Qn. Ce type de fonctionnement est bien adapté pour surveiller l'évolution des formes d'onde de plusieurs signaux et pour détecter d'éventuelles saturations. Cette forme de réalisation autorise la surveillance en parallèle de N signaux différents et il est possible de récupérer les enveloppes des signaux avec une résolution réglable par le dispositif de traitement 2 au moyen de la périodicité des initialisations effectuées dans la mémoire 12 par des écritures de mots de données d'initialisation In.

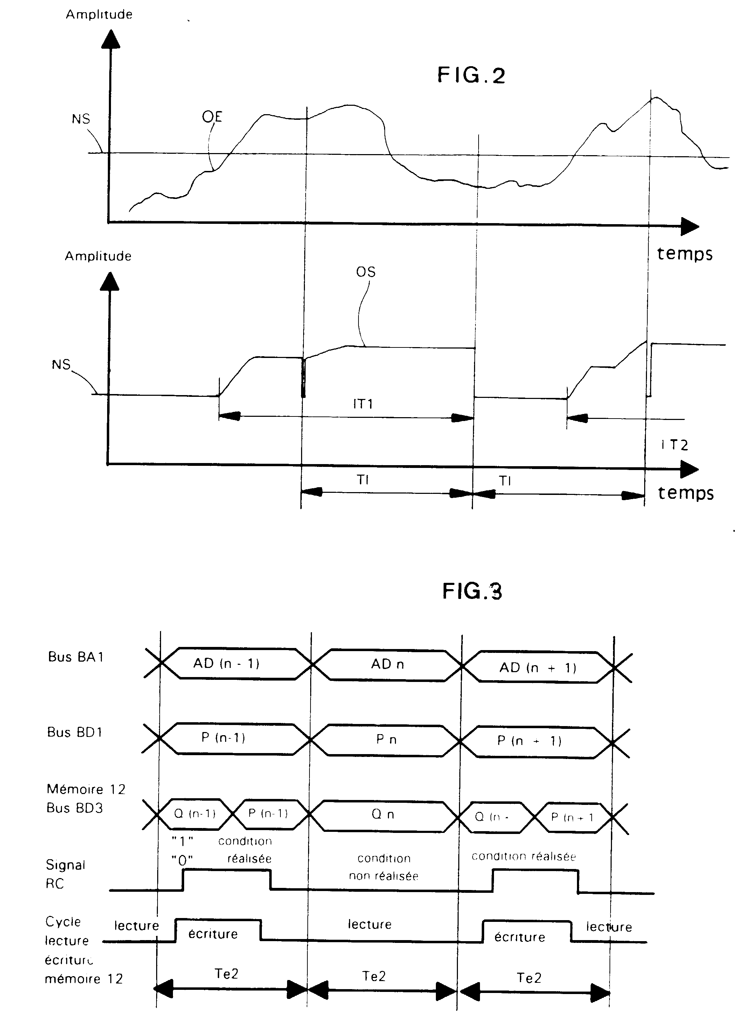

En référence à la figure 2, un exemple de forme d'onde OE d'un signal d'entrée représenté sous sa forme analogique, est montré en haut de la figure 2 ; un exemple de forme d'onde OS d'un signal de sortie correspondant, tel que reconstituable sous sa forme analogique à partir des mots de données Qn contenus dans la mémoire 12, est montré en bas de la figure 2.

Dans cet exemple, le signal est surveillé par rapport à un niveau de saturation NS. Les initialisations sont effectuées cycliquement à une période TI. La valeur du mot In écrit dans la mémoire 12 à chaque instant d'initialisation correspond au niveau NS. La période TI définit une résolution pour la reconstitution de l'enveloppe de la forme d'onde OS. Dans le cas où la période TI est très faible, l'enveloppe de la partie de la forme d'onde OS d'amplitude supérieure au niveau de saturation NS est reconstruite avec précision. Dans le cas contraire où la période TI est grande, l'enveloppe est plus globale et laisse apparaître essentiellement les montées du signal et les pics d'amplitude.

A la figure 2, il apparaît donc qu'une saturation intervient au cours d'intervalles temporels IT1 et IT2. Il conviendrait donc de baisser le gain du signal afin d'éviter cette saturation dans la chaîne de traitement.

En référence au chronogramme de la figure 3, le cycle des N comparaisons effectuées par le circuit de comparaison 13 et correspondant au traitement d'une trame TM est maintenant décrit.

Le chronogramme de la figure 3 montre un exemple de trois comparaisons successives entre les mots de données d'entrée P(n-1), Pn et P(n+1) et les mots de données mémorisées Q(n-1), Qn, et Q(n+1). Ces comparaisons font partie du cycle des N comparaisons. Pour la première comparaison, celle entre les mots P(n-1) et Q(n-1), le mot P(n-1) est considéré supérieur au mot Q(n-1), en valeurs absolues. Pour la seconde comparaison, celle entre les mots Pn et Qn, le mot Pn est considéré égal ou inférieur au mot Qn, en valeurs absolues. Pour la troisième comparaison, celle entre les mots P(n+1) et Q(n+1), le mot P(n+1) est considéré supérieur au mot Q(n+1), en valeurs absolues.

Pendant un cycle de comparaison, les mots d'adresses AD1 et ADN sont successivement transmis sur le bus d'adresse BA1 (Cf. figure 3, ligne 5 à partir du bas) par le circuit d'adressage 11. Les mots d'adresse AD1 et ADN sont reçus par le circuit de démultiplexage 10 et par la mémoire 12 et ceux-ci, en réponse, délivrent successivement les mots de données d'entrée P1 à PN et les mots de données mémorisées Q1 à QN, respectivement (Cf. figure 3, lignes 3 et 4). Les mots P1 à PN et Q1 à QN sont successivement chargés dans le circuit de comparaison 13 afin d'effectuer les N comparaisons. Les mots de données P1 à PN sont chargés parallèlement dans le circuit de comparaison 13 et dans le registre d'écriture de comparaison 14.

Lorsque la condition de comparaison est réalisée, comme cela est le cas dans cet exemple pour les comparaisons (P(n-1), Q(n-1)) et (P(n+1), Q(n+1)), le signal de résultat de comparaison RC vient à l'état logique "1" (Cf. figure 3, ligne 2). Le signal RC à l'état "1" commande l'écriture du mot de données d'entrée P(n-1), P(n+1) dans la cellule correspondante de la mémoire 12. Les mots de données mémorisés Q(n-1) et Q(n+1) comparés aux mots de données d'entrée P(n-1) et P(n+1) sont donc remplacés par les mots P(n-1) et P(n+1) dans les cellules correspondantes de la mémoire 12 (Cf. figure 3, ligne 3).

Lorsque la condition de comparaison n'est pas réalisée, comme cela est le cas dans cet exemple pour la comparaison (Pn, Qn), le signal de résultat de comparaison RC reste à l'état logique "0" et le registre d'écriture de comparaison ne procède pas à la transmission du mot de données d'entrée Pn vers le port de sortie de données 141. Aucune écriture n'est donc effectuée dans la mémoire 12 et le mot Qn reste donc mémorisé dans la cellule correspondante de la mémoire 12. Le mot Pn est ensuite écrasé dans le registre 14 par le mot de données d'entrée suivant P(n+1).

Les écritures d'initialisation dans la mémoire 12 peuvent être réalisées épisodiquement ou cycliquement et cela à la convenance du dispositif de traitement 2, le dispositif de traitement 2 réalisant ces initialisations en activant le signal de commande d'initialisation CI et en transférant les mots de données d'initialisation I1 à IN et les mots d'adresse correspondants AD1 à ADN respectivement vers le port d'écriture de données 120 et le port d'adresses 122 de la mémoire 12. Pendant ces écritures d'initialisation, le circuit d'accès et de priorité de mémoire 16 active alors le signal de commande de troisième état TEE et commande ainsi une déconnexion afin d'octroyer le bus de données BD2 au registre d'écriture d'initialisation 15.

Le transfert des mots de données mémorisés Qn vers le dispositif de traitement 2 peut s'effectuer de différentes façons.

Comme montré à la figure 3, les mots de données Qn sont disponibles sur le bus de données BD3 (Cf. figure 3, ligne 3) à chaque fois que la mémoire 12 est en phase de lecture (Cf. figure 3, ligne 1) et, donc, le bus BD3 étant également relié au dispositif de traitement 2, le dispositif 2 peut donc accéder aux mots Qn pendant les intervalles temporels correspondant aux phases de lecture.

Une autre manière pour le dispositif de traitement 2 d'accéder aux mots de données mémorisés Qn consiste à le faire à travers une activation du signal de commande de lecture CL. Les écritures éventuelles de mots de données d'entrée Pn sont alors suspendues par le circuit de gestion d'accès et de priorité de mémoire 16, et le circuit de traitement 2 adresse à sa convenance dans la mémoire 12 les mots de données mémorisés Qn et cela à travers le bus d'adresses BA2.

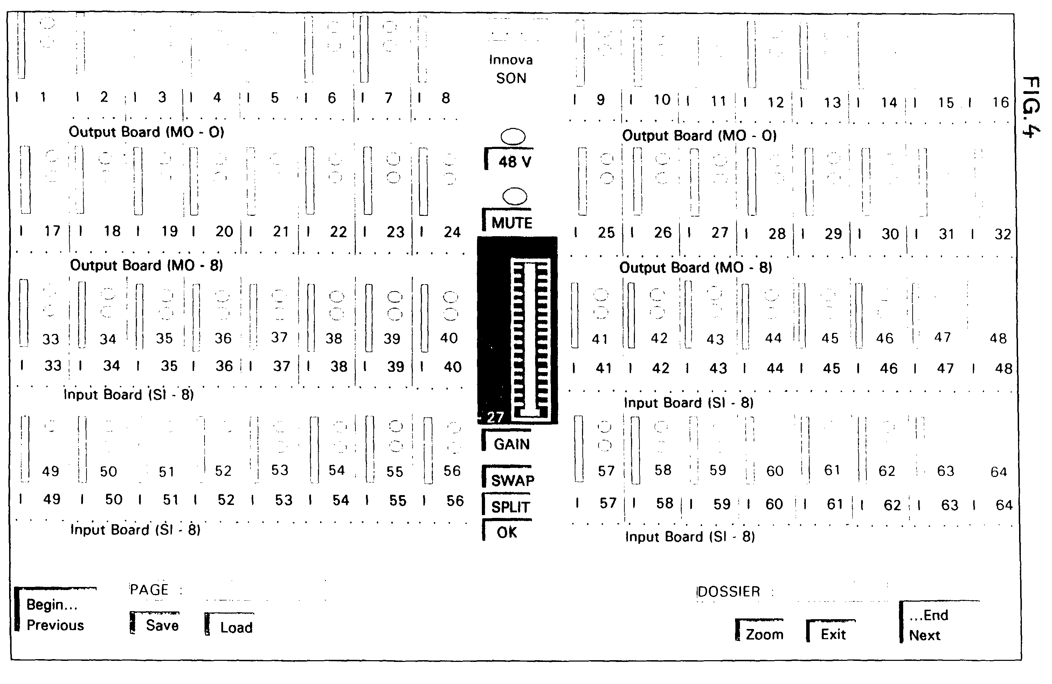

Ce dernier mode de fonctionnement est bien adapté pour le cas où, par exemple, le circuit de traitement 2 doit traiter les mots Qn dans un ordre différent de celui du mot Q1 au mot QN. Il en est ainsi par exemple, lorsque le multicomparateur selon l'invention est mis en oeuvre dans un système professionnel de commutation et de transmission bidirectionnel à multiplexage temporel de signaux haute-fidélité audio-numériques et audio-analogiques. Dans ce cas, les mots de données Qn sont destinés à être affichés sur l'écran d'un micro-ordinateur qui est divisé, comme montré à la figure 4, en une pluralité de blocs de commande M1 à M64. Un mot de données Qn peut donner lieu à un affichage dans plusieurs blocs de commande en fonction de la configuration du système et le micro-ordinateur doit donc être capable d'adresser les mots Qn dans n'importe quel ordre. Le multi-comparateur selon l'invention est particulièrement bien adapté pour une application dans un tel système. Le multicomparateur est alors de préférence localisé dans un équipement dit récepteur maître généralement localisé dans une régie de mixage. Le dispositif de traitement 2 est alors constitué par le micro-ordinateur à travers l'écran duquel il est possible de surveiller en temps réel différents paramètres, tels qu'amplitudes ou magnitudes, d'une pluralité de signaux d'entrée et de contre-réagir au niveau de circuits d'entrée inclus dans le système, par exemple en diminuant le gain desdits circuits d'entrée.

Bien évidemment, l'invention ne se limite pas aux formes de réalisations préférées décrites ci-dessus. De multiples autres formes de réalisations sont à la portée de l'homme du métier compte tenu des informations divulguées dans la présente demande, et restent du domaine de l'invention. Ainsi, pour certaines applications, le circuit de démultiplexage 10 (figure 1) peut s'avérer inutile car les modes de données d'entrée sont alors disponibles sur un bus et directement adressables.

Dans d'autres cas, par exemple lorsque la condition de comparaison correspond à la satisfaction d'une équation à calculer, le circuit de comparaison peut être réalisé à partir d'un microcalculateur de type à microprocesseur.

Par ailleurs, notons que les mémoires de type DRAM, mémoires dynamiques, sont bien adaptées pour constituer la mémoire 12. En effet, la mémoire 12 étant lue cycliquement, le rafraîchissement des mémoires DRAM se fait alors de façon "naturelle", ce qui simplifie la circuiterie de gestion autour de la mémoire 12. Néanmoins, d'autres types de mémoires sont également utilisables telles que des mémoires de type SRAM, par exemple, dans le cas de contraintes de temps d'accès particulièrement sévères.

## Revendications

1. Dispositif de multi-comparaison dynamique pour surveiller en temps réel des évolutions dans un flux de mots numériques entrants du type comprenant
des moyens de mémorisation (12) ayant N cellules de mémoire pour mémoriser respectivement N mots numériques (Q1 à QN) précédemment sélectionnés dans ledit flux de mots numériques entrants, N étant un entier prédéterminé,
des moyens de comparaison (13, 11, BD1, BD3, BA1) pour effectuer une série de N comparaisons respectivement entre N mots numériques entrants (P1 à PN) et lesdits N mots numériques mémorisés (Q1 à QN), à chaque comparaison, un mot numérique entrant (Pn) étant comparé à un mot numérique mémorisé (Qn) de même rang (n),
des moyens de lecture (11, BA1, BA2, CL, R) pour lire des mots numériques mémorisés (Qn) dans lesdits moyens de mémorisation (12),
caractérisé en ce qu'il comprend en outre
des moyens de sélection (RC) pour sélectionner à l'issue de chacune des N comparaisons un mot numérique parmi les deux mots numériques comparés (Pn, Qn) et cela en fonction d'une condition de comparaison prédéterminée (Pn>Qn) et pour obtenir ainsi N mots numériques sélectionnés,
des premiers moyens d'écriture (14, BD2, W) pour écrire lesdits N mots numériques sélectionnés respectivement dans lesdites N cellules de mémoire desdits moyens de mémorisation (12), et
des moyens de commande (17, LC) pour commander un fonctionnement cyclique du dispositif et traiter ainsi la totalité dudit flux de mots numériques entrants au moyen d'une pluralité de séries successives de N comparaisons chacune.

2. Dispositif de multi-comparaison dynamique conforme à la revendication 1,
caractérisé en ce qu'il comprend également des seconds moyens d'écriture (CI, 15, BD2, W) pour écrire épisodiquement ou cycliquement des mots numériques d'initialisation (In) dans lesdites cellules de mémoire desdits moyens de mémorisation (12).

3. Dispositif de multi-comparaison dynamique conforme à la revendication 1 ou 2,
caractérisé en ce qu'il comprend également des moyens (16, TEE, TEI) pour gérer des priorités d'accès auxdits moyens de mémorisation (12).

4. Dispositif de multi-comparaison dynamique conforme à l'une quelconque des revendications 1 à 3, dans lequel ledit flux de mots numériques entrants est constitué de trames successives (TM) de N mots multiplexés chacune,
caractérisé en ce qu'il comprend également des moyens de démultiplexage (10) pour démultiplexer chacune des trames (TM) en un groupe de N mots numériques entrants (P1 à PN) auxquels correspondent respectivement N mots d'adresse (AD1 à ADN).

5. Dispositif de multi-comparaison dynamique conforme à l'une quelconque des revendications 1 à 4,
caractérisé en ce que lesdits moyens de lecture comprennent des moyens d'adressage (BA2, 11) pour commander des lectures dans lesdits moyens de mémorisation (12) de séries quelconques de mots numériques mémorisés (Qn).

6. Dispositif de multi-comparaison dynamique conforme à l'une quelconque des revendications 1 à 5,
caractérisé en ce que, lors d'une comparaison, ladite condition de comparaison est réalisée (RC="1") et consécutivement le mot numérique entrant correspondant (Pn) est sélectionné, lorsque la valeur absolue du mot numérique entrant correspondant est supérieure à la valeur absolue du mot numérique mémorisé correspondant (Pn>Qn).

7. Dispositif de multi-comparaison dynamique conforme à la revendication 6 et inclus dans un système professionnel de commutation et de transmission bidirectionnelle à multiplexage temporel de signaux haute-fidélité audio-numériques et audio-analogiques,
caractérisé en ce qu'il comprend des moyens (CL, BA2, 11, BA1, BD3, 20, 21, 23) pour autoriser un affichage desdits mots numériques mémorisés (Qn) sur un écran d'un micro-ordinateur (2) inclus également dans le système et cela dans une pluralité de blocs de commande (M1 à M64) prévus sur ledit écran afin de permettre à un utilisateur de surveiller en temps réel l'évolution de différents paramètres (OS, NS, IT1, IT2) d'une pluralité (N) de signaux (p1 à pN) transmis dans le système et de commander en temps réel des modifications et adaptations de configuration du système.

8. Dispositif de multi-comparaison dynamique conforme à l'une quelconque des revendications 1 à 7,
caractérisé en ce qu'il est réalisé sous la forme d'un circuit intégré.

9. Dispositif de multi-comparaison dynamique conforme à l'une quelconque des revendications 1 à 8,
caractérisé en ce que les moyens de comparaison sont réalisés sous la forme d'un calculateur.

## Patentansprüche

1. Vorrichtung mit dynamischem Mehrfachvergleich zur Echtzeitüberwachung von Entwicklungen in einem Strom von einlaufenden Digitalwörtern, mit
Speichermitteln (12), die N Speicherzellen zum jeweiligen Speichern von N Digitalwörtern (Q1 bis QN) aufweisen, die zuvor in dem Strom von einlaufenden Digitalwörtern ausgewählt worden sind, wobei N eine vorbestimmte ganze Zahl ist,
Vergleichsmitteln (13, 11, BD1, BD3, BA1) zum Bewirken einer Serie von jeweils N Vergleichen zwischen N einlaufenden Digitalwörtern (P1 bis PN) und den N gespeicherten Digitalwörtern (Q1 bis QN), wobei bei jedem Vergleich ein einlaufendes Digitalwort (Pn) mit einem gespeicherten Digitalwort (Qn) desselben Ranges (n) verglichen wird,
Lesemitteln (11, BA1, BA2, CL, R) zum Lesen der in den Speichermitteln (12) gespeicherten Digitalwörter (Qn),
dadurch gekennzeichnet, daß sie ferner aufweist
Auswählmittel (RC) zum Auswählen eines Digitalwortes am Ende jedes der N Vergleiche unter den zwei verglichenen Digitalwörtern (Pn, Qn) und dies in Abhängigkeit von einer vorbestimmten Vergleichsbedingung (Pn>Qn) und zum Erhalten von N ausgewählten Digitalwörtern auf diese Weise,
erste Schreibmittel (14, BD2, W) zum Schreiben der jeweils N ausgewählten Digitalwörter in die N Speicherzellen der Speichermittel (12), und
Steuermittel (17, LC) zum Steuern einer zyklischen Funktion der Vorrichtung und zum Verarbeiten der Gesamtheit des Stromes an einlaufenden Digitalwörtern auf diese Weise mittels einer Mehrzahl von aufeinanderfolgenden Serien von jeweils N Vergleichen.

2. Vorrichtung nach Anspruch 1 mit dynamischem Mehrfachvergleich,
dadurch gekennzeichnet, daß sie ferner zweite Schreibmittel (CI, 15, BD2, W) aufweist zum episodischen oder zyklischen Schreiben von digitalen Initialisierungswörtern (In) in die Speicherzellen der Speichermittel (12).

3. Vorrichtung nach Anspruch 1 oder 2 mit dynamischem Mehrfachvergleich,
dadurch gekennzeichnet, daß sie ferner Mittel (16, TEE, TEI) zum Steuern von Prioritäten für den Zugang zu den Speichermitteln (12) aufweist.

4. Vorrichtung nach einem der Ansprüche 1 bis 3 mit dynamischem Mehrfachvergleich, bei der der Strom von einlaufenden Digitalwörtern durch aufeinanderfolgende Rahmen (TM) von jeweils N gemultiplexten Wörtern gebildet ist,
dadurch gekennzeichnet, daß sie ferner Demultiplexermittel (10) zum Demultiplexen jedes der Rahmen (TM) in einer Gruppe von N einlaufenden Digitalwörtern (P1 bis PN) aufweist, denen jeweils N Adresswörter (AD1 bis ADN) entsprechen.

5. Vorrichtung nach einem der Ansprüche 1 bis 4 mit dynamischem Mehrfachvergleich,
dadurch gekennzeichnet, daß die Lesemittel Adressierungsmittel (BA2, 11) aufweisen zum Steuern des Lesens von beliebigen Serien von gespeicherten Digitalwörtern (Qn) in den Speichermitteln (12).

6. Vorrichtung nach einem der Ansprüche 1 bis 5 mit dynamischem Mehrfachvergleich,
dadurch gekennzeichnet, daß bei einem Vergleich die Vergleichsbedingung erfüllt ist (RC="1") und daraufhin das entsprechende einlaufende Digitalwort (Pn) ausgewählt wird, wenn der absolute Wert des entsprechenden einlaufenden Digitalwortes größer als der absolute Wert des entsprechenden gespeicherten Digitalwortes ist (Pn>Qn).

7. Vorrichtung nach Anspruch 6 mit dynamischem Mehrfachvergleich, die in einem professionellen System zur Veränderung und zur bidirektionalen Übertragung im Zeitmultiplex von digitalen und analogen HiFi-Audiosignalen enthalten ist,
dadurch gekennzeichnet, daß sie Mittel (CL, BA2, 11, BA1, BD3, 20, 21, 23) aufweist, um eine Anzeige der gespeicherten Digitalwörter (Qn) auf einem Schirm eines Mikrocomputers (2) zuzulassen, der ebenfalls in dem System enthalten ist, und dies in einer Mehrzahl von Steuerblöcken (M1 bis M64), die auf dem Schirm vorgesehen sind, um es einem Anwender zu ermöglichen, in Echtzeit die Entwicklung unterschiedlicher Parameter (OS, NS, IT1, IT2) einer Mehrzahl (N) von in dem System übertragenen Signalen (p1 bis pN) zu überwachen und in Echtzeit Modifikationen und Adaptionen zur Konfiguration des Systems zu steuern.

8. Vorrichtung nach einem der Ansprüche 1 bis 7 mit dynamischem Mehrfachvergleich,
dadurch gekennzeichnet, daß sie in der Form eines integrierten Schaltkreises verwirklicht ist.

9. Vorrichtung nach einem der Ansprüche 1 bis 8 mit dynamischem Mehrfachvergleich,
dadurch gekennzeichnet, daß die Vergleichsmittel in der Form eines Rechners verwirklicht sind.

## Claims

1. Dynamic multiple comparison device to monitor in real time changes in an entering digital word stream, of the type comprising
memory means (12) having N memory cells to memorize respectively N digital words (Q1 to QN) previously selected from said entering digital word stream, N being a predetermined integer,
comparison means (13, 11, BD1, BD3, BA1) to effect a series of N comparisons respectively between N entering digital words (P1 to PN) and said N memorized digital words (Q1 to QN), upon each comparison, an entering digital word (Pn) being compared to a memorized digital word (Qn) of the same rank (n),
reading means (11, BA1, BA2, CL, R) to read memorized digital words (Qn) in said memory means (12),
characterized in that it further includes
selection means (RC) to select following each of the N comparisons a digital word among the two compared digital words (Pn, Qn) and this as a function of a predetermined comparison condition (PN>Qn) and thereby to obtain N selected digital words,
first writing means (14, BD2, W) to write said N selected digital words respectively in said N memory cells of said memory means (12), and
control means (17, LC) to control a cyclical operation of the device and thereby to process all of said entering digital word stream by means of a plurality of successive series of N comparisons each.

2. Dynamic multiple comparison device according to claim 1, characterized in that it also comprises second writing means (CI, 15, BD2, W) to write episodically or cyclicly initialization digital words (In) in said memory cells of said memory means (12).

3. Dynamic multiple comparison device according to claim 1 or 2,
characterized in that it also comprises means (16, TEE, TEI) to manage priorities of access to said memory means (12).

4. Dynamic multiple comparison means according to any one of claims 1 to 3, in which said entering digital word stream is constituted by successive frames (TM) each of N multiplexed words,
characterized in that it also comprises demultiplexing means (10) to demultiplex each of the frames (TM) into a group of N entering digital words (P1 to PN) to which correspond respectively N address words (AD1 to ADN).

5. Dynamic multiple comparison device according to any one of claims 1 to 4,
characterized in that said reading means comprise address means (BA2, 11) to control readings in said memorization means (12) of any series of memorized digital words (Qn).

6. Dynamic multiple comparison device according to any one of claims 1 to 5,
characterized in that, during a comparison, said comparison condition is produced (RC = «1») and consecutively the corresponding entering digital word (Pn) is selected, when the absolute value of the corresponding entering digital word is greater than the absolute value of the corresponding memorized digital word (Pn>Qn).

7. Dynamic multiple comparison device according to claims 6 and included in a professional system for switching and bidirectional transmission with time multiplexing of high fidelity audio-numeric and audio-analogic signals,
characterized in that it comprises means (CL, BA2, 11, BA1, BD3, 20, 21, 23) to permit display of said memorized digital words (Qn) on a screen of a microprocessor (2) included also in the system and this in a plurality of control blocks (M1 to M64) provided on said screen so as to permit a user to monitor in real time the changes of different parameters (OS, NS, IT1, IT2) of a plurality (N) of signals (p1 to pN) transmitted in the system and to control in real time changes and adaptations of configuration of the system.

8. Dynamic multiple comparison device according to any one of claims 1 to 7,
characterized in that it is embodied in the form of an integrated circuit.

9. Dynamic multiple comparison device according to any one of claims 1 to 8,
characterized in that the comparison means are embodied in a computer.
